# EUROPEAN PATENT SPECIFICATION

(11) **EP 1 133 919 B1**
(45) Date of publication and mention of the grant of the patent: **03.09.2003**
(21) Application number: 01500062.3
(22) Date of filing: 13.03.2001
(51) Int. Cl.: A21B 1/26, F24C 15/32

(54) **Pastry and/or baker's oven**
Ofen für Konditorei und/oder Bäckerei
Four pour pâtisserie et/ou boulangerie

(30) Priority: 15.03.2000 ES 200000630
(43) Date of publication of application: 19.09.2001
(73) Proprietor: SALVA INDUSTRIAL, S.A., 20100 Lezo (Guipuzcoa) (ES)
(72) Inventor: Eguilegor Ramirez, Marcial, Carretera Nacional 1, km.477, 20100 Lezo (ES)
(74) Representative: Carpintero Lopez, Francisco

(56) References cited:
- EP-A- 0 713 059
- GB-A- 2 057 254
- US-A- 2 898 437
- US-A- 5 647 342

## Description

### OBJECT OF THE INVENTION

The invention relates to a pastry and/or baker's oven of the vertical rotating type, in other words, the type in which a rotating disk is incorporated into the base, which supports the corresponding tray carriage that contains the product to be cooked. This type of oven also corresponds to those that have a door for frontal access through which the tray carriages are introduced to and withdrawn from the interior of cooking chamber established within the oven, incorporating a module in which the combustion chamber and the corresponding burner are placed, along with the air exchanger and the fan that forces the hot air towards the cooking chamber.

The object of this invention is to provide an oven of the type referred to above, with some modular characteristics that allow the exchange of the carrier module of the combustion chamber that contains the burner, the exchanger and the fan, in order to allow it to be assembled in any combination both in the rear part of the oven and at the side, having also allowed for the possibility of inverting the position of the combustion chamber and the exchanger, such that it is possible to have an outlet of gases or smoke towards one side or the other, all this in accordance with the requirements of the premises or unit where the oven is installed.

### BACKGROUND OF THE INVENTION

Different types of pastry and/or baker's oven are known. Among those that are denominated as vertical, those can be cited that are described in the spanish Utility Models 225.132 and 255.751, as well as the Spanish Patent of Invention 9401103, all from the same applicant.

Specifically, in the Utility Model 225,132, a vertical oven is described in which the boundary of the cooking chamber is marked by metallic panels located perpendicular to the floor of the oven, forming a polyhedron of many faces, with one missing to allow a door for access of the oven to the cooking chamber itself.

In the other Utility Model 255,751, a cooking oven is also described in which the calorific power is achieved by means of a an electric heater and/or by means of a fuel burner, indistinctly, such that in both cases the access door can be coupled to one or another system for generating heat, according to whether one or the other is used for transmitting heat to an exchanger set in an area immediately above.

As for the oven described in the Patent of Invention 9401103, which is of the cyclothermal vertical type, it is established that next to the cooking chamber and corresponding to the part opposite to the door for access to the oven, there is a prismatic collector that takes air from the return towards an expansion chamber, which is connected to another collector that forces the return air from the radiating panels of a suction lung mixed with the combustion gases that come from the combustion chamber and this return air is then forced towards the hearth of the cooking chamber.

In the ovens described in these three cited documents, it is difficult to alter the position of the combustion chamber with the burner, that of the exchanger and the fan, unless general structural changes are made to the oven.

### DESCRIPTION OF THE INVENTION

The oven that is herein put forward is of the type that has a floor on which the corresponding rotating platform is placed, on which the carriage for the trays with the products to be cooked are placed. There are some walls which mark the boundary of the cooking chamber itself, as well as a carrier module for the combustion chamber, the exchanger and the fan. Said oven has the special feature that it can be adapted to the area in which it is to be placed, with an assembly of panels that form the internal and external walls of the combustion chamber, as well as the position of the aforementioned module, to form the oven best suited to the area.

More specifically, the oven of the invention is characterised in that on the base of the oven, there are some vertical corner pieces, in which the cooking chamber is partially conformed, which has an octagonal section.

Two of the aforementioned comer pieces are made of folded sheet and adopt a triangular section with the outer vertex open. Such comer pieces may be formed from the same piece of folded sheet or, optionally, by folding and soldering of two or more sheets.

The third corner piece is extended to form a panel that determines one of the sides of the octagon of the cooking chamber. At the end of this panel, the frame of the oven door is mounted, also made from folded sheet.

Between the aforementioned comer pieces, there are two well defined gaps whose width is corresponds to one of the sides of the octagon, gaps that can be either filled or closed, either by a panel of closure or by the module itself that forms the combustion chamber, the exchanger and the fan.

In front of the comer pieces, rising from the base of the oven, some ribs have been envisaged to position and support the internal panels that, in conjunction with the external panels, define the conduct through which the air circulates towards the cooking chamber and from this chamber, in a closed circuit, to the exchanger.

The support of the panel closing the corresponding gap is performed by means of threaded studs and corresponding nuts. Optionally, the aforementioned studs can be attached by any means to the panel of closure itself.

Regarding the attachment of the module, which integrates the combustion chamber/ exchanger/ fan, to the corresponding gaps, this is performed in a similar fashion. That is to say, the module has a frontal frame equipped with threaded studs, coinciding with orifices set in the comer pieces.

A further special feature that can be highlighted is that the burner of the combustion chamber and the exchanger can take up two positions, in order to place the gas outlets of both of these and the burner feed on one side or the other of the aforementioned burner module. For this purpose, the area that houses both elements is opened laterally, such that said openings are optionally closed with the blocked lid or the lid that contains ports for access to the combustion chamber and/or the exchanger. The assembly of the aforementioned lids is also performed by means of threaded studs and their corresponding nuts, said studs being preformed in the side frames of the aforementioned module.

### DESCRIPTION OF THE DRAWINGS

To complement the description that is being made and with the aim of providing a better understanding of the characteristics of the invention, in accordance with an example of a preferred embodiment of the invention, the specification is accompanied as an integral part thereof by a set of drawings in which, by way of illustration and nonlimiting, the following has been represented:

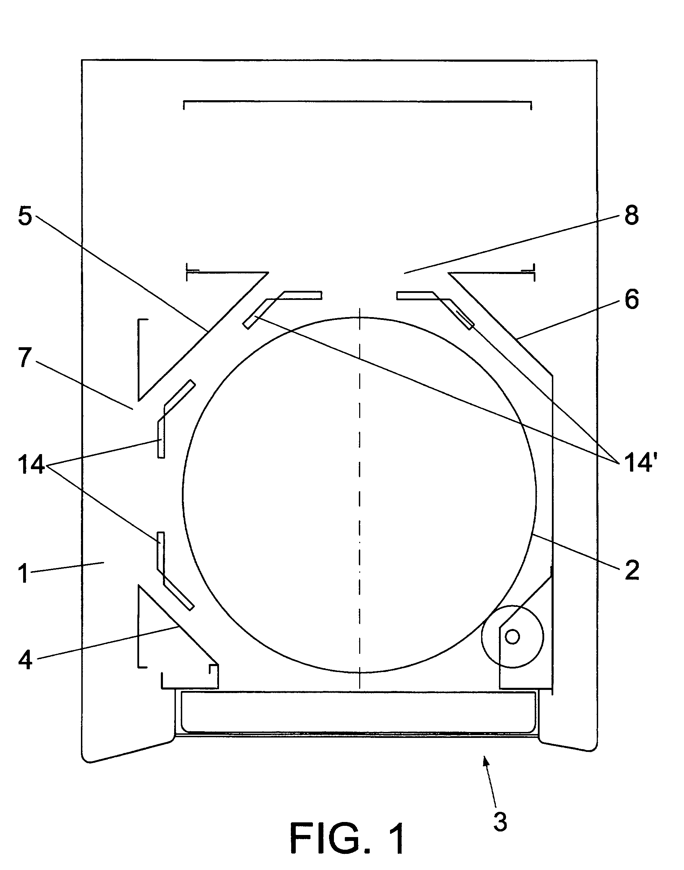

Figure 1: This figure shows a schematic representation of the oven as a plan view, seen in the same position and section of the corner pieces, as well as the ribs for positioning and support of the internal panels.

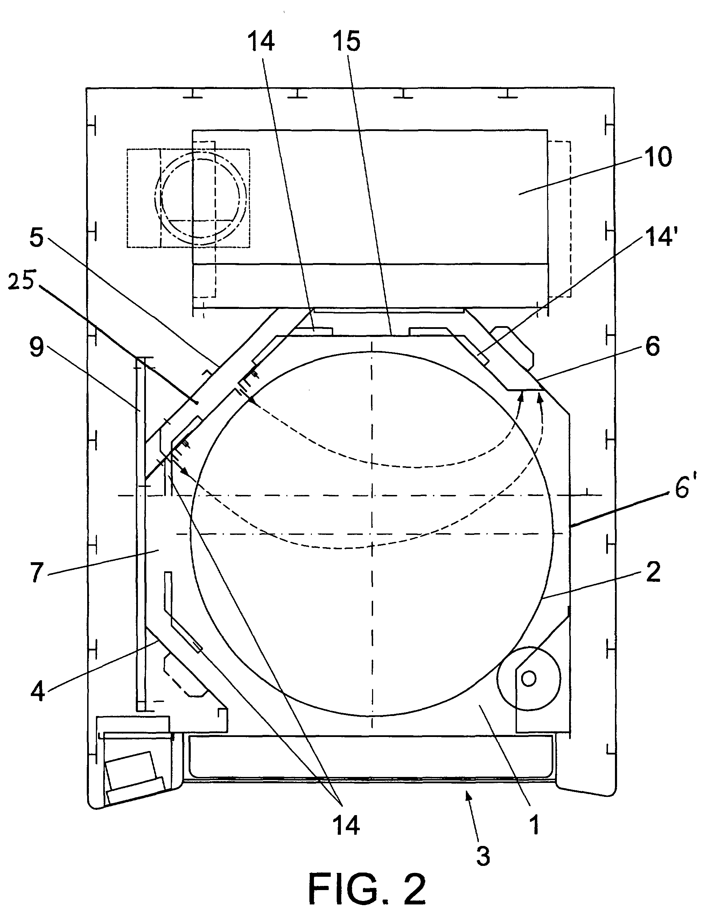

Figure 2: This figure shows the same schematic representation of the same oven, but with the panel of closure occupying one of the gaps and the module occupying the other, specifically, the gap on the opposite side of the door. The assembly of the internal walls of the cooking chamber of the oven can also be observed.

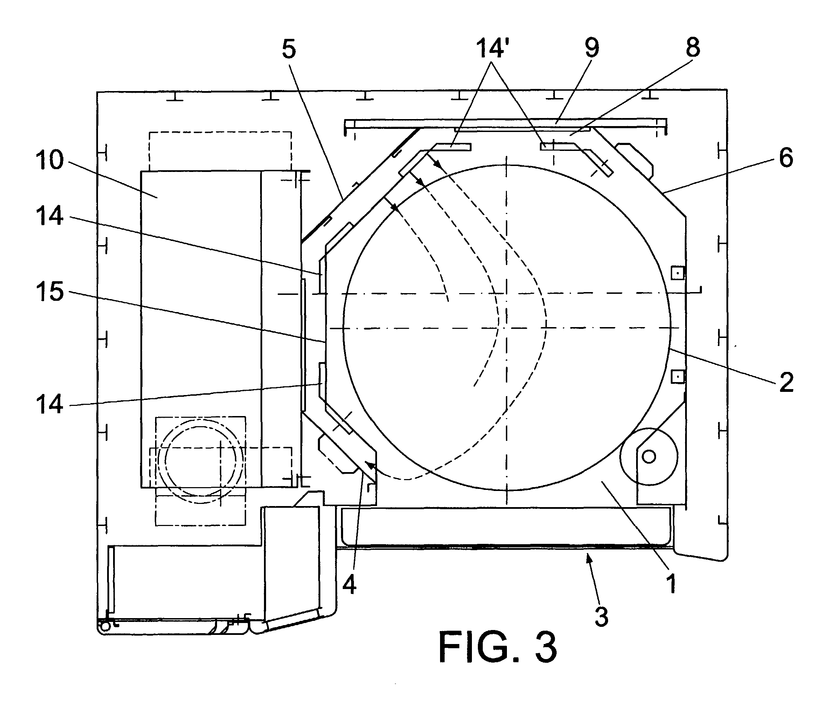

Figure 3: This figure shows another schematic view as a plan view, but this time with the module closing the side gap and the panel of closure occupying the position opposite to the door for access to the oven.

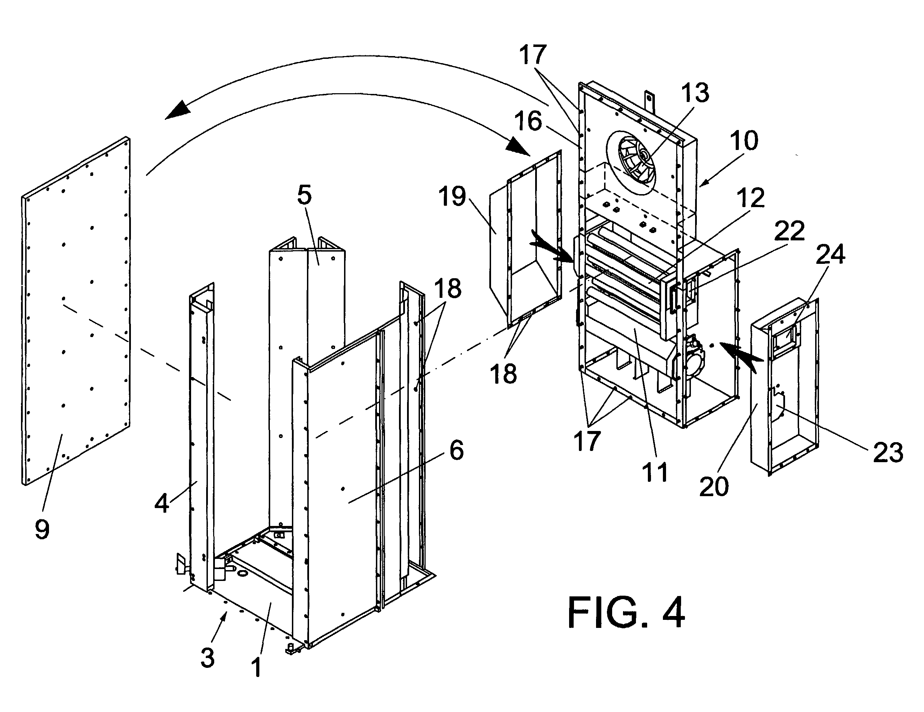

Figure 4: This finally shows an exploded view, in which the corner pieces and the metallic vertical panel can be seen. These form part of the external walls of the cooking chamber, as well as the panel that closes the left side gap, in this case, and the module, which is located at the back of the oven. In the exploded view, the side lids, which are also interchangeable, of said module can also be seen.

### PREFERRED EMBODIMENT OF THE INVENTION

As can be seen in the cited figures, the oven of the invention has, on the plate that constitutes the base or the floor (1) thereof, a rotating disk (2) on which the carriages of the trays with the products to be cooked, being introduced through the frontal part (3) which constitutes the door for access to the cooking chamber established within.

The boundary of the cooking chamber is marked by three corner pieces (4), (5) and (6), between which are two gaps (7) and (8) that, indistinctly, can be occupied by the panel of closure (9) or by the module (10).

The module (10), as has already been indicated, contains the combustion chamber (11) and the corresponding burner, the exchanger (12) and the fan (13). The burner of the combustion chamber can take up two positions, in order to place the outlet of gases and the feed for this chamber on one side or the other of the aforementioned module (10), as a function of the requirements. The same thing applies with the exchanger (12). The closure lids (19) and (20) will be located on one side or the other of the module (10) depending on the position of assembly of the exchanger, as the lid (19) is blocked and the other (20) has access ports (23) and (24) corresponding to the outlets (21) and (22) of the combustion chamber (11) and the exchanger (12), respectively.

Returning to the corner pieces (4), (5) and (6), as is observed in the attached figures, they are of folded sheet, with the corner pieces (4) and (5) adopting a general triangular cross-section with the outer vertex open. These can obviously be formed from the same piece of folded sheet or by appropriately folding and soldering of two or more sheets.

The corner piece (6) takes on the form of an acute angle and is extended in (6') coinciding with one of the sides of the octagon that configures the cooking chamber. At the end of the extension (6') the folded sheet that also forms the framework of the access port (3) of the oven is mounted.

In front of the corner pieces (4), (5) and (6) and in front of the gaps (7) and (8) marked by them, there are the ribs (14) and (14'), which act to support and fasten the internal panels (15) which determine, in conjunction with the corresponding corner pieces, the conduct (25) through which the hot air circulates in the closed circuit.

The assembly and fastening of the module (10) in any of the commented positions will be performed as a result of the frame (16) thereof being equipped with a series of threaded studs (17) that will be housed in holes (18) made for this specific purpose in the corresponding vertical corner pieces (4), (5) and (6), having envisaged that the panel (9) of closure of the gap not occupied by the module (10), according to the position thereof, also has threaded studs (17), which are housed in the holes (18) made in the corner pieces (4) and (5) and in the panel (6), attaching by means of bolts that screw onto the aforementioned studs or by any other conventional method.

The side lids (19) and (20) also have holes (18) drilled in the frames thereof, which are housed in the threaded studs (17) set in the frames of the side of the module (10), and fastened by means of bolts or another conventional method, in analogous fashion to the method for mounting and fastening module (10) and the panel (9) to the corner pieces (4), (5) and (6).

## Claims

1. A pastry and/or baker's oven, which is of the type denominated as cyclothermal rotating, with a cooking chamber marked by an internal and another external wall, with a frontal door for access for the carriages of the trays with the product to be cooked, with a plate forming the floor on which there is established a rotating disk on which the carriage is accurately placed with the trays bearing the product, with a module next to the cooking chamber itself bearing the combustion chamber with the burner, the air exchanger and the fan for circulating the hot air, essentially **characterised in that** on the base of the oven three corner pieces (4), (5), (6) are mounted which form part of the octagonal outline of the cooking chamber and, between whose comer pieces are to be found the gaps (7) and (8), sufficiently wide so that on one side of the octagon, whose gaps can be indistinctly closed, either with the panel of closure (9), or with the module (10) that integrates the combustion chamber (11) with the burner, the exchanger (12) and the fan (13), having also envisaged that from the base of the oven rise ribs (14) and (14'), positioned in front of the corners and in front of the gaps defined thereby, whose ribs, preferably made of sheet soldered to the base, act to support and fasten the internal panels (15) that will occupy the appropriate position, depending on the position that the module (10) occupies.

2. A pastry and/or baker's oven, according to claim 1, **characterised in that** the position of the lids (19) and (20), that are located in the sides of the module (10), can be exchanged depending on the position occupied by the burner of the combustion chamber (11) and the exchanger (12), such that the openings (23) and (24) of the lid (20) correspond to the outlets (21) of the burner and (22) of the exchanger (12).

3. A pastry and/or baker's oven, according to the previous claims, **characterised in that** both the frontal frame (16) of the module (10) and one of the faces of the panel of closure (9), and the side frames of the module (10), have threaded studs (17) that are housed in holes (18) in the corner pieces (4), (5) and (6) and in the lids (19) and (20), respectively, fastening them all by means of nuts.

## Patentansprüche

1. Backofen für Feinbäckereien und/oder Bäckereien, der Art, die Heissluftbacköfen genannt werden, mit einem von einer äusseren und einer inneren Wand begrenzten Backraum, mit einer stirnseitigen Zugangstür für die Wägen, die die Bleche mit den zu backenden Produkten tragen, wobei eine Bodenplatte vorgesehen ist, auf der sich eine Drehscheibe befindet, auf der der Wagen mit den die Produkte tragenden Blechen gestellt wird, wobei an dem Backraum selbst ein Modul angebaut ist, das die Brennkammer mit dem Brenner trägt, den Luftaustauscher und das Heissluftgebläse, im wesentlichen **dadurch gekennzeichnet, dass** auf dem Ofensockel drei Rahmeneckbleche (4), (5) und (6) montiert sind, die zu der achteckigen Kontur des Backraums gehören, wobei zwischen diesen Rahmeneckblechen die Lücken (7) und (8) liegen, deren Breite der einer Seite des Achtecks entspricht, wobei diese Lücken ohne Unterschied geschlossen werden können, entweder mit einem Verschlusspaneel (9) oder mit dem Modul (10), das die Brennkammer (11) mit dem Brenner, den Austauscher (12) und das Gebläse (13) umfasst, wobei weiterhin vorgesehen ist, dass aus dem Ofensockel Vorsprünge (14 und (14') vorstehen, die vor den Ecken und den zwischen diesen festgelegten Lücken positioniert sind, wobei diese Vorsprünge, die vorzugsweise aus an dem Sockel angeschweissten Blechstücken bestehen, als Stütze und zur Halterung der inneren Wände (15) dienen, die jeweils die passende Position in Abhängigkeit der vom Modul (10) eingenommenen Position einnehmen.

2. Backofen für Feinbäckereien und/oder Bäckereien nach Anspruch 1, **dadurch gekennzeichnet, dass** die Position der Deckel (19) und (20), die an den Seitenwänden des Moduls (10) angeordnet sind, ausgetauscht werden kann, in Abhängigkeit der vom Brenner der Brennkammer (11) und dem Austauscher (12) eingenommenen Position, so dass die Öffnungen (23) und (24) des Deckels (20) mit den Ausgängen (21) des Brenners (22) und des Austauschers (12) in Verbindung stehen.

3. Ofen für Feinbäckereien und/oder Bäckereien nach den vorstehenden Ansprüchen, **dadurch gekennzeichnet, dass** sowohl der stirnseitige Rahmen (16) des Moduls (10) und eine der Seiten des Verschlusspaneels (9) als auch die seitlichen Rahmen des Moduls (10) mit Gewindestangen (17) versehen sind, die in Öffnungen (18), die jeweils an den Rahmeneckblechen (4), (5) und (6) und an den Deckeln (19) und (20) vorgesehen sind, hineingeschoben werden, wobei alle mit Druckmuttern untereinander verbunden werden.

## Revendications

1. Four à pâtisserie et/ou à boulangerie du type tournant cyclothermique, avec une chambre de cuisson délimitée par une cloison externe et une cloison interne, avec une porte avant d'accès pour les chariots porteurs des plateaux contenant les produits à cuire, disposant d'une plaque constituant le sol, sur laquelle est établi un disque tournant sur lequel est déposé le chariot avec les plateaux porteurs des produits, la chambre de cuisson comprenant un module porteur de la chambre de combustion avec le brûleur, de l'échangeur d'air et du ventilateur d'impulsion de l'air chaud, essentiellement **caractérisé en ce que** la base du four comprend trois coins (4), (5) et (6) qui font partie du contour octogonal de la chambre de cuisson et entre lesquels se trouvent les creux (7) et (8), d'une largeur équivalente à celle d'un côté de l'octogone, ces creux pouvant être fermés indifféremment, soit à l'aide d'un panneau de fermeture (9), soit à l'aide du module (10) qui comprend la chambre de combustion (11) avec le brûleur, l'échangeur (12) et le ventilateur (13), de même qu'il a été prévu qu'il émerge de la base du four des épaulements (14) et (14') positionnés devant les coins et les creux définis entre ceux-ci, ces épaulements étant de préférence en tôle soudée à la base et servant d'appui et de soutien aux cloisons internes (15) qui occuperont la position opportune en fonction de la position qu'occupera le module (10).

2. Four à pâtisserie et/ou à boulangerie, selon la revendication 1, caractérisé ne ce que la position des caches (19) et (20) placés sur les côtés du module (10), pourront être changés en fonction de la position occupée par le brûleur de la chambre de combustion (11) et de l'échangeur (12), de manière que les ouvertures (23) et (24) du cache (20) se trouvent face aux sorties (21) du brûleur et (22) de l'échangeur (12).

3. Four à pâtisserie et/ou à boulangerie, selon les revendications précédentes, **caractérisé en ce que** tant le cadre avent (16) du module (10) et l'une des faces du panneau de fermeture (9) que les cadres des côtés du module (10) disposent de tiges filetées (17) qui pénètrent dans des orifices (18), dans les coins (4), (5) et (6) et dans les caches (19) et (20) respectivement, tous étant unis à l'aide d'écrous de serrage.
